Europäisches Patentamt

European Patent Office

Office européen des brevets

(19)

(11) Publication number: **0 400 714**
**A2**

# (12) EUROPEAN PATENT APPLICATION

(21) Application number: **90201278.0**

(22) Date of filing: **21.05.90**

(51) Int. Cl.5: **A23J 3/04, A23J 3/14**

(30) Priority: **01.06.89 US 359967**

(43) Date of publication of application:
**05.12.90 Bulletin 90/49**

(84) Designated Contracting States:
**AT BE CH DE DK ES FR GB GR IT LI NL SE**

(71) Applicant: **UNILEVER NV**
**Burgemeester s'Jacobplein 1 P.O. Box 760**
**NL-3000 DK Rotterdam(NL)**

(84) **BE CH DE DK ES FR GR IT LI NL SE AT**

Applicant: **UNILEVER PLC**
**Unilever House Blackfriars P.O. Box 68**
**London EC4P 4BQ(GB)**

(84) **GB**

(72) Inventor: **Mai, Jimbin**
**5 Foxburn**
**New City, New York 10956(US)**
Inventor: **Breitbart, Dennis**
**10 Nancy Street**
**Kendal Park, NJ 08824(US)**
Inventor: **Fischer, Craig Daniel**
**19 Apache Drive**
**Manalapan, NJ 07726(US)**

(74) Representative: **Mulder, Cornelis Willem**
**Reinier, Dr. et al**
**UNILEVER N.V. Patent Division P.O. Box 137**
**NL-3130 AC Vlaardingen(NL)**

(54) **Proteinaceous material.**

(57) A fat substitute is prepared from proteinaceous material which delivers the creamy mouthfeel of fat without the high calorie content or cholesterol of fat. The fat substitute is prepared by adjusting the pH of the food protein to its isoelectric point under conditions which prevent self aggregation of the proteins. This procedure causes the protein molecules to form microglobular particles. Concentration of the microglobular particles yields the fat substitute.

To impart flavor to the fat substitute, food flavors can be incorporated during the process. The product can be consumed as it is or it can be utilized as a fat and incorporated into other food products as a fat replacement.

EP 0 400 714 A2

## PROTEINACEOUS MATERIAL

This invention is concerned with developing a proteinaceous material suitable as a fat substitute from fat free proteinaceous material. The fat substitute delivers the creamy mouthfeel of fat but not the high calorie and/or cholesterol content of fat. Food materials which deliver the texture and creamy mouthfeel of fat but not the calories or cholesterol of fat are desirable for direct consumption or incorporation into food matrices.

Several fat replacement compositions have been described. Suspensions of yeast glycan having "a bland flavor, a 'fat-like' mouthfeel, and a sheen in appearance" are disclosed in Sucher et al., U.S. patent 3,867,554., Robbins et al., U.S. Patent no.4,122,196 is directed to the preparation of yeast glycan and describes its characteristics. The manufacture of a fat replacer from denatured whey is described in U.S. Patent no. 4,734,287 to Singer, et al. In addition to fat replacements, an oil-free oil replacement composition formed by combining protein, cellulose gum and heated acidified starch is described by Rispoli et al., U.S. Patent no. 4,308,294. A modified gluten product which resembles the oil and fat replacements described above and the process for its manufacture are described by Singer et al., U.S. Patent no. 4,198,438; however there is no suggestion that the product would be useful as a fat substitute. The present invention is an improvement over the prior art because the method is simple and yields a non-carbohydrate based product, with a more fat-like, creamy texture. The present invention therefore is related to fat substitutes, food materials which incorporate the fat substitutes and to processes for preparing the fat substitutes and such food materials.

The process uses any of a variety of food proteins as starting materials in preparing microglobular protein particles which comprise the novel fat substitute product.

In our invention it is essential to adjust the pH of an aqueous protein suspension to the approximate isoelectric point of the protein. The pH adjustment neutralizes the change of the protein molecules and causes them to form microglobular particles of prolate to oblate ellipsoid configuration, which are impenetrable to water, Tanford, Physical Chemistry of Macromolecules, John Wiley & Sons, Inc., NY, 1961. During the pH adjustment the protein molecules can become self-aggregated and form a fibrous material not suitable as a fat substitute. Self-aggregation can be easily prevented by reducing intra-molecular contacts by conditions such as shear and/or dilution. The microglobular particles are then separated from the aqueous suspension to yield the fat substitute. The fat substitute can also be incorporated into a variety of foodstuffs so as to lower their fat content or alter their texture.

A variety of food proteins such as milk protein, milk protein isolates, whey protein concentrates, egg white proteins, plasma proteins such as bovine serum albumin (BSA), fish protein concentrates, soy protein and its isolates, cereal proteins, nut and seed proteins can be used as starting materials. It is preferred that a substantial portion of the protein be in its native undenatured configuration, although partially denatured protein such as spray dried egg white or nonfat dried milk solids will yield a suitable product.

In a preferred embodiment, a protein suspension is first filtered to remove undesired particulate matter, if such matter is present, and the resulting mixture is then diluted with water to a concentration of protein such that self-aggregation is minimized. The protein suspension is then subjected to shear to disperse the protein molecules. The pH of the protein suspension is adjusted to the isoelectric point of the protein during the shearing step by slowly delivering an acidic or basic solution, causing the formation of microglobular particles of the protein. The pH adjusted suspension is then centrifuged to sediment the microglobular particles. The precipitated microglobular protein has a texture and mouthfeel similar to creamy fats and is suitable as a fat substitute or replacement. The term "creaminess" as used herein refers to mouthfeel, coating and slip generally associated with fats such as dairy fat.

To impart flavor to the product, food flavors can be incorporated into the fat substitute. Small amounts of carbohydrates, emulsifiers and organic salts can also be added to strengthen the creamy texture of the products. The product is both fat and cholesterol free and can be consumed as it is or it can be incorporated into other products as a fat replacement or texture modifier.

In a preferred embodiment a concentrated protein such as an egg white suspension may be filtered to remove particulate matter, if any. The concentrated protein suspension of 10-20 weight percent protein is then diluted with water to yield a suspension such that self-aggregation will be minimized; generally the final suspension is 1-10 percent protein by weight. The dilute protein suspension may also be filtered rather than the concentrated solution.

The resulting protein suspension is then subjected to shear by a blender, homogenizer or any method that can further disperse the protein. In order to prevent foaming of the protein suspension, the shearing step can be done in a vacuum. If a vacuum is not used excellent results are obtained if the process is carried out under atmospheric pressure. An anti-foaming agent such as a silicone defoamer may be added if foaming occurs at atmospheric pressure. For instance, a single drop of Mazu DF 210S (Mazer Chemicals Inc., 10% silicone defoamer) is sufficient to minimize foam production which may occur at atmospheric pressure. Equally suitable are other defoamers approved for food use such as Hodag Silicone Antifoam FD-62 (Hodag Chemical Corporation); simethicone (Corning Glass); and dimethylpolysiloxane from various suppliers.

A solution of acid is prepared in a volume equal to 10-200% of the volume of the dilute protein, and containing sufficient amount of acid for adjusting the pH of the protein suspension to the established isoelectric point range of the protein suspension. For instance, the preferred acid solution for use with egg white protein contains 1.9 meq hydrochloric acid per 100 ml. Other acids such as phosphoric, sulfuric, acetic, citric, tartaric, malic, and adipic are suitable for use in the present invention.

The acid solution is then delivered to the protein suspension while the protein molecules are dispersed by a combination of dilution and shear. Dispersing the protein molecules as they become neutrally charged enables them to form individual microglobular particles and prevents their interaction to form a fibrous network of proteins. After the pH is near the isoelectric point of the protein suspension, the microglobular particles are at their point of minimum solubility. Preferably, the temperature is above 40°C and below the temperature at which the protein will denature (= 55°C). The protein content of the suspension is approximately 1-10, preferably 1-5 percent by weight.

The microglobular particles are separated from the suspension by a method such a centrifugation at a speed sufficient to sediment the microglobular particles or by filtration techniques. The supernatant is discarded or recycled to be treated by the same process to increase the yield. Preferably the centrifugation is carried out under circumstances suitable to pelletize the microglobular particles. The temperature during the centrifugation varies between 4 and 25°C.

The concentrated microglobular particles obtained in this way have a texture and mouthfeel similar to creamy fats and can be used as a fat substitute as shown below.

The product of this process is useful as a fat substitute in that it is both fat and cholesterol free and can be consumed as it is. The invention further provides products incorporating the fat substitute including but not limited to dairy products such as skim milk, ice cream, cream cheese, margarine, butter, fat spreads and beverages, and dressings such as salad dressing and mayonnaise with reduced fat content. Incorporation of the fat substitute results in products with reduced fat and cholesterol contents.

If desired, food flavors such as cream and butter flavor can be incorporated into the fat substitute to impart flavor to the product. Carbohydrates such as starches and gums, emulsifiers, such as mono and di-glycerides, and salts such as calcium chloride can also be added in small amounts to provide a fat substitute with a creamier texture.

The fat substitute retains full utility when the pH of the environment is altered as when it is added to another product.

The following examples are provided to illustrate the invention and are not intended to limit the same.

Example 1

Preparation of fat substitute from egg white powder

Spray dried egg white powder was reconstituted with water to produce a 6% solids suspension. The pH of the suspension was 7.23. The pH of the suspension was found to depend on the age and source of the egg white powder. An acid solution containing 1.9 meq HCl/100 ml was prepared. A volume of acid solution equal to the volume of the egg white suspension was used to adjust the pH of the egg white suspension during the blending process.

The egg white suspension was blended for 20 minutes under ambient conditions in a Waring blender set at low speed. During the blending, the acid solution was added slowly to the egg white suspension. The final pH of the suspension was 4.6.

The suspension was then centrifuged at 12°C at 6800 xg for 20 minutes. The supernatant was decanted and the pellet was recovered. The recovered pellet consisting mostly of particles of microglobular protein, had a creamy, fat-like mouthfeel and was useful as a fat substitute.

Example 2

Preparation of Fat Substitute from fresh egg white

Fresh egg white was first filtered through a strainer to remove particulate matter. The protein content of the egg white was adjusted to approximately 6% by dilution with water. The resulting solution was transferred to a Waring blender and the system was then subjected to vacuum. An acid solution of equal weight to the egg white protein suspension and containing sufficient acid for adjusting the pH of the protein suspension to its isoelectric point was prepared. The acid solution was then delivered to the protein suspension over a twenty minute period while the protein solution was being blended at low speed under vacuum. At the end of the twenty minute period the blending was stopped and the protein suspension was found to have a pH of 4.56, a temperature of 40°C and a protein content of approximately 3%. The protein suspension was then centrifuged at 6800 x g at 12°C for twenty minutes. The supernatant was then discarded and the precipitate collected.

The precipitate was found to have a texture and mouthfeel similar to creamy fats and was both fat and cholesterol free.

Example 3

Preparation of fat substitute from egg white powder using polysaccharides or emulsifiers as texture modifiers

Experiments were performed wherein polysaccharides or emulsifiers were included as texture modifiers during preparation of the fat substitute. Addition of some of these materials resulted in a preparation showing an improvement of the creamy mouthfeel.

The fat substitute was prepared following the procedure set forth in Example 1. The texture modifier was added to the egg white suspension before the blening and acidification processes. Taste comments provided by a panel of experts after evaluation of a series of products prepared in accordance with this example, are summarised in Table 1.

TABLE 1

| The effect of texture modifier on creamy mouthfeel of a fat substitute prepared from egg white protein | | | |
|---|---|---|---|
| Texture Modifier | wt% | Ph of the finished solution | Creaminess* |
| Control | --- | 4.5 | + + |
| Guar Gum | 0.10 | 4.5 | + |
| Xanthan Gum | 0.10 | 4.4 | + + |
| Carrageenan | 0.05 | 4.6 | + |
| Mono- and Diglycerides | 0.10 | 4.4 | + + + |
| Maltodextrin | 5.00 | 4.5 | + + + |

* + = creaminess

Example 4

Preparation of reduced fat salad dressing using the fat substitute of Example 1

Three 500 g batches of fat reduced salad dressing containing various levels of a fat substitute made in accordance with the process of this invention as described in Example 1 were made and compared against the control dressing made from original flavor Hidden Valley RanchTM dry mix (The HVR Company, Oakland, CA) using low fat milk and mayonnaise.

The fat substitute was added to the low fat milk and homogenized in a Homorex homogenizer at speed setting 30-40 for 1 minute. The Hidden Valley RanchTM dry mix was then added to the mixture and whipped using a wire whisk. The control salad dressing was prepared according to the manufacturers instructions, briefly, the contents of a single packet of Hidden Valley RanchTM dry mix were combined with 1 cup milk and 1 cup mayonnaise mixed with a wire whisk or fork and refrigerted thirty minutes prior to use. A comparison of the resulting products is shown in Table 2.

TABLE 2

| A comparison of salad dressings made with various levels of the fat substitute of example 1 to a regular dressing reconstituted from Hidden Valley Ranch Dry Mix | | | | | | |
|---|---|---|---|---|---|---|
| Dressings | Composition of Ingredients (wt%) | | | | Fat | Comments |
| | Mayonnaise | 1% Fat milk | Fat subst. | Dry mix | | |
| Control | 47 | 47 | -- | 6 | 42.3 | Creamy |
| Test 1 | -- | 81 | 13 | 6 | 8.1 | Very thin |
| Test 2 | -- | 69 | 25 | 6 | 6.9 | Creamy with good consistency |
| Test 3 | -- | 60 | 34 | 6 | 6.0 | Very Airy and thick |

When the fat substitute was used at a level of 25% by weight (Test 2), the best texture of the salad dressing was observed. If further reduction of the fat content is desired, a portion or all of the 1% fat milk can be replaced by skim milk.

EXAMPLE 5

Preparation of fat reduced ice cream using the fat substitute

In order to evaluate the effects of replacing the milk fat in ice cream with the fat substitute of this invention, two different ice cream formulae (Tables 3 and 4) were used. No special procedure was employed in preparing the ice cream containing the fat substitute. A stabilizer blend containing mono- and di-glycerides, polysorbate 65, carrageenan, cellulose gum, locust bean gum, (Continental Colloids) and dextrose was added. The ice cream ingredients listed in Tables 3 and 4 were mixed, pasteurized, homogenized at 2500/500 psi and aerated in a Taylor ice cream machine (103-12, Taylor Freezer, Rockton, Illinois) to 50% overrun.

Both formulae produced a 50% fat reduced ice cream with good texture and creamy mouthfeel as evaluated by an expert taste panel.

TABLE 3

| Formula I used to produce fat reduced ice cream | | |
|---|---|---|
| | Wt% | |
| Ingredients | Control | Fat reduced |
| $H_2O$ | 54.69 | 51.56 |
| Sugar | 13.43 | 13.43 |
| NFDM* | 12.14 | 12.14 |
| Corn Syrup solids 42 DE | 6.44 | 6.44 |
| Sweet Butter | 12.50 | 6.25 |
| Tween 80** | 0.06 | 0.06 |
| Stabilizer Blend | 0.44 | 0.44 |
| 2x Vanilla Flavor | 0.30 | 0.30 |
| Fat substitute of Example 1 | ---- | 9.38 |

TABLE 4

| Formula II used to produce fat reduced ice cream | | |
|---|---|---|
| | Wt% | |
| Ingredients | Control | Fat reduced |
| $H_2O$ | 46.48 | 47.26 |
| Heavy cream (36% milk fat) | 27.80 | 13.90 |
| NFDM* | 9.92 | 14.79 |
| Sugar (sucrose) | 15.00 | 15.00 |
| Stabilizer Blend | 0.36 | 0.36 |
| 2x Vanilla Flavor | 0.44 | 0.44 |
| Fat substitute of Example 1 | ---- | 8.25 |

\* Nonfat dry milk solids
\** (ICI Americas Inc., Wilmington, De)

EXAMPLE 6

Preparation of fat reduced dairy product with fat substitute

Various levels of the fat substitute prepared in Example 1 were evaluated as additives to produce a dairy product suitable as a cream cheese-like spread or butter substitute. A portion of regular salted butter was mixed with fat substitute, water (in some cases), and emulsifier blend containing monoglycerides and lecithin in a food processor until a product with consistent texture was obtainied. In test 3 where there was too much free water resulting in water seepage, a gelatin suspension containing 1.49% gelatin was used instead of water and was found to prevent water seepage. The finished products were then molded and refrigerated overnight for evaluation. A summary of the test and evaluation is shown in Table 5.

6

TABLE 5

| Evaluation of fat reduced dairy product with fat substitute of example 1 and butter. | | | | | | | | |
|---|---|---|---|---|---|---|---|---|
| | | | | | Wt% Composition | | | |
| Samples | Butter | Fat Substitute | Gelatin | H$_2$O Added | Emulsifier Blend | % Fat Content | % Fat Reduction | Comments |
| Regular Salted Butter | 100* | -- | -- | -- | -- | 80 | -- | Typical butter creamy texture |
| Test 1 | 45.95 | 50.55 | -- | -- | 3.5 | 40.26 | 50 | Cream cheese type texture |
| Test 2 | 37.40 | 41.21 | -- | 18.54 | 2.85 | 32.77 | 59 | Cream cheese type texture |
| Test 3 | 45.95 | 12.50 | 1.49 | 37.49 | 3.5 | 40.26 | 50 | Creamy texture |

* Estimated to contain 80% milk fat and 20% H$_2$O.

**Claims**

1. Process for the preparation of a proteinaceous material, suitable as fat substitute by carrying out the following steps:

    a) preparing an aqueous suspension of edible protein

    b) subjecting this suspension to a combination of dilution and shear.

    c) adjusting the pH of the suspension to a value of about the pH of the isoelectric point of the protein

    d) separating the microglobular particles formed in c) from the suspension.

2. Process according to claim 1, wherein the shear is sufficient to prevent the formation of a substantial amount of aggregated protein particles.

3. Process according to claims 1 or 2, wherein the edible protein is selected from milk protein, whey protein, egg white protein, plasma protein, fish protein, soy protein, cereal protein, nut protein or seed protein.

4. Process according to claims 1-3 wherein the protein is substantially undenatured protein.

5. Process according to claim 1-4, wherein the protein is derived from a dried protein.

6. Process according to claims 1-4, wherein the protein is bovine serum protein,

7. Process according to claims 1-6, wherein the concentration of edible protein in the suspension is 1-10 wt%.

8. Process according to claim 1, wherein the pH is adjusted by adding an acid selected from: sulfuric acid, phosphoric acid, hydrochloric acid, citric acid, tartaric acid, malic acid, adipic acid or acetic acid to the suspension.

9. Process according to claim 1, wherein the dilution and the pH adjustment are carried out simultaneously by adding a diluted acid solution to the protein suspension, while the suspension is subjected to shear.

10. Process according to claim 1, wherein the separation is carried out by centrifugation and decantation of the supernatant liquid.

11. Process according to claim 9, wherein the amount of acid solution used for the dilution is 10-200 vol% of the amount of the protein suspension.

12. Process according to claim 9, wherein an amount of edible anti-foam agent is added to the mixture before or during the shearing.

13. Process according to claim 12, wherein the anti-foam agent is a silicone.

14. process according to claim 1 and 9, wherein to a sheared suspension of egg-white protein an acid solution of diluted hydrochloric acid is added, whereupon the formed microglobular particles are separated from the suspension.

15. Process according to claims 1, 10 and 14, wherein the separation is carried out by centrifugation under circumstance suitable to pelletize the microglobular particles.

16. Process according to claims 1, 9 and 14 wherein the temperature of the mixture is kept between 40-55°C, while the shearing takes place.

17. process according to claims 1, 10 and 14, wherein the temperature during centrifugation is kept between 4 and 25°C.

18. Process according to claim 1, wherein a food flavor and/or a texture modifier are incorporated in the microglobular particles.

19. Process according to claim 18, wherein the food flavor and/or the texture modifier are added to the protein suspension.

20. Process according to claims 18 and 19, wherein the texture modifier is selected from: carbohydrates, gums, mono- and diglycerides.

21. Proteinaceous, microglobular protein particles as obtainable by carrying out the processes of the claims 1-20.

22. Food products containing the proteinaceous, microglobular protein particles of claim 21.

23. Use of proteinaceous, microglobular protein particles in food products characterised by the use of these particles as fat replacer.